# EUROPEAN PATENT APPLICATION

(11) **EP 4 818 741 A1**
(43) Date of publication of application: **07.10.2026**
(21) Application number: 25167479.2
(22) Date of filing: 31.03.2025
(51) Int. Cl.: G01S 7/41, G01S 13/04, G06N 3/0455, G06N 3/0499, G01S 13/34, G01S 13/42, G01S 13/58

(54) **MACHINE-LEARNING MODEL FOR PROCESSING RADAR DATASETS IN MULTIPLE DOMAINS**

(71) Applicant: Infineon Technologies AG, 85579 Neubiberg (DE)
(72) Inventor: SUKIANTO, Tobias, 80636 München (DE); STROBEL, Maximilian, 86491 Ebershausen (DE); CARBONELLI, Cecilia, 81477 München (DE)
(74) Representative: Kraus & Lederer PartGmbB

(57) **Abstract**

Various examples of the disclosure generally pertain to processing radar datasets using a pre-trained neural network. Various examples pertain to a neural network including one or more attention layers. Various examples further pertain to training strategies for training the neural network. Pre-processing strategies are disclosed for pre-processing radar data so that domain mismatches can be reduced.

## Description

### TECHNICAL FIELD

Various examples of the disclosure generally pertain to processing radar datasets using a machine-learned model. Various examples of the disclosure specifically relate to a machine-learned model for processing radar datasets including one or more attention layers.

### BACKGROUND

Radar sensors are used in various use cases and application scenarios. An example use case is human-presence detection for detecting humans in a scene. For instance, if a human is detected, appliances may be switched on or may be switched off. An alarm may be triggered. Perimeter security may be established. Further use cases include tracking of movable objects or classification of objects based on radar data. Yet further examples of application scenarios include people counting or locating of individuals. Another example includes gesture detection or classification. In consumer applications, radar-based measurements offer an affordable, energy-efficient, and simple solution compared to camera sensors for various tasks.

For these and further application scenarios, radar data obtained from a radar sensor may be processed using a machine-learned (ML) model. Intermediate frequency (IF) radar signals, which are generated by combining the transmitted signal and the received signal, are measured to obtain radar frames. The radar frames or radar datasets obtained from the radar frames are then processed using an ML model such as a neural network (NN). State-of-the art NNs translate the IF signals into the desired prediction / output, which is specific to the application scenario, such as activity classification, people counting, or presence detection.

It has been observed that state-of-the-art ML models have problems when transferring knowledge across domains that were not present in the training dataset.

### SUMMARY

A need exists for advanced ML models to process radar data obtained from a radar sensor. This need is met by the features of the independent claims. The features of the dependent claims define embodiments.

The subject disclosure provides an ML model that can accurately solve a specific task associated with the particular application scenario. An ML model is provided that can be applied to various different application scenarios. An ML model is provided that can generalize well across domains. Training and pre-processing techniques are disclosed that further support transfer across domains.

The term "domains" may refer to different application scenarios, operational environments, or data distributions where a machine-learned model is applied. In the context of radar data processing, domains may pertain to distinct use cases, such as human-presence detection, gesture classification, people counting, object tracking, or activity recognition. Each domain may involve unique characteristics in terms of radar signal properties, environmental conditions, or operational setups. For instance, a first domain may correspond to an indoor scenario where radar sensors are used for presence detection, while a second domain may correspond to an outdoor environment where the same or different radar sensors are used for tracking movable objects. Domains could also differ based on factors such as radar frequency bands, sensor configurations, or the type of targets being detected or classified. In machine learning, domains may also refer to the distribution of training data versus test data. For example, a model trained on radar data from one domain (e.g., a specific environmental condition) may not generalize well to another domain (e.g., a different environmental condition) unless it is specifically designed or adapted for cross-domain applicability as disclosed in various examples. In the present context, domains may be specifically associated with different radar configurations and/or different locations, sites or scenes with different multipath signatures and/or different movement, gesture, or vital patterns such as breath rate etc.

According to examples, a pre-trained NN is used to process radar datasets; the NN includes one or more attention layers. It has been found that the use of one or more attention layers increases the transferability of the ML model used to process radar datasets across different domains, e.g. when using radar sensors of different types or when using radar sensors in different operational scenarios. At the same time, such NN with at least one attention layer has a real-time prediction capability, enabling application to different application scenarios. The disclosed techniques offer improved performance, especially for real-time application scenarios such as activity detection. This is due to their ability to exploit the history of sensor signals and to generalize across multiple domains. The attention mechanism enables the interpretation of the sensor signal history in various ways. For instance, in one instance, the attention mechanism may be trained to focus on the beginning of a sequence of radar datasets while in another instance, the attention mechanism may be trained to focus on the middle portion of the sequence of radar data sets. Yet another instance of the attention mechanism may be trained to correlate embeddings associated with the beginning of the sequence of the radar datasets with embeddings associated with the middle of the sequence of the radar datasets. This flexibility in considering the context of the embeddings enables the NN to better capture domain-specific patterns and relationships within the sequence of radar datasets (context features). It enables to flexibly adapt the NN to multiple application scenarios across different domains, e.g., without having to change hyperparameters of the NN.

Such method may include associating each of the embeddings with a positional encoding indicating a position of the respective embedding in the sequence of embeddings.

For example, the pre-trained encoder may include one or more convolutional layers.

The pre-trained encoder may be trained in an unsupervised or self-supervised training process optimizing a reconstruction loss.

The one or more attention layers may include at least one multi-headed self-attention layer.

A computer-implemented method includes obtaining, from a radar sensor, a sequence of radar frames. The method further includes determining one or more characteristics of each of the radar frames. The method further includes determining whether a pre-trained model has been trained using a number of training samples that each have one or more reference characteristics matching the one or more characteristics of each of the radar frames. The method further includes, if it is judged that the pre-trained model has not been trained using the predefined number of training samples each having the one or more reference characteristics that match the one or more characteristics of each of the radar frames: pre-processing the sequence of radar frames using a pre-processing module to obtain pre-processed radar frames having one or more pre-processed characteristics that match the one or more reference characteristics and processing the pre-processed radar frames in the pre-trained model.

The one or more reference characteristics may include at least one of a radar chirp bandwidth, a number of radar chirps per frame, a chirp repetition rate, an inter-chirp time offset, a chirp time, a frame time, or a number of samples per chirp

The method may further include, if it is judged that the pre-trained model has been trained using the predefined number of training samples each having the one or more reference characteristics: by-passing the pre-processing module and processing the one or more radar frames in the pre-trained model.

A computer-implemented method includes training a model based on a training dataset that comprises a plurality of radar datasets obtained from radar measurements using a first radar sensor type. The method also includes, upon training the model: employing the model for processing radar datasets obtained from radar measurements using a second radar sensor type that is different from the first radar sensor type by employing a pre-processing module to pre-process radar frames acquired using a radar sensor of the second radar sensor type so that they mimic radar frames acquired using a radar sensor of the first radar sensor type.

The model may provide a sequence-to-sequence prediction for each radar dataset in a sequence of radar datasets and comprises at least one attention layer.

The model may alternatively provide a sequence-to-one prediction across all radar datasets in a sequence of radar datasets, the sequence optionally comprising between 100 and 1000 radar datasets.

The method may include fine-tuning the model for processing the radar datasets obtained from the radar measurements using the second radar sensor type in an unsupervised or self-supervised learning process that is based on a reconstruction loss.

The learning process may be a masked learning process.

A feed-forward neural network of the model may output the at least one prediction. Such feed-forward neural network may be fixed when finetuning.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates an ML model providing a sequence-to-sequence prediction according to various examples.
FIG. 2 schematically illustrates an ML model providing a sequence-to-one prediction according to various examples.
FIG. 3 schematically illustrates an ML model including a transformer encoder according to various examples.
FIG. 4 schematically illustrates a pre-processing model for pre-processing radar datasets according to various examples.
FIG. 5 is a flowchart of a method according to various examples.
FIG. 6 is a flowchart of a method according to various examples.
FIG. 7 is a flowchart of a method according to various examples.
FIG. 8 schematically illustrates an ML model including a transformer encoder and a transformer decoder for enabling a reconstruction loss in self-supervised or unsupervised training, e.g., finetuning for domain adaption, according to various examples.
FIG. 9 schematically illustrates a flowchart of a method according to various examples.

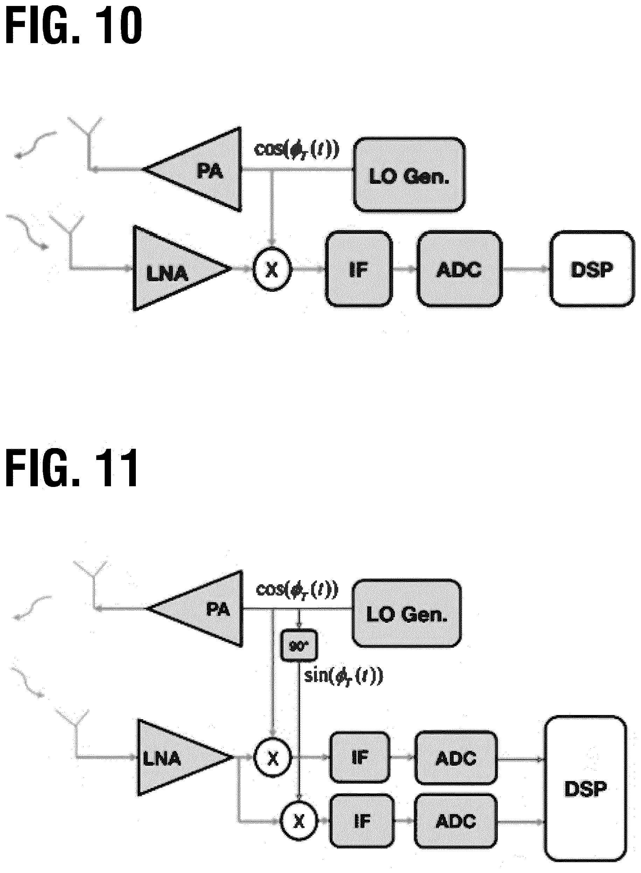

FIG. 10 schematically illustrates a hardware architecture of a radar sensor defining a domain according to various examples.
FIG. 11 schematically illustrates a sense architecture of a radar sensor defining another domain according to various examples.
FIG. 12 schematically illustrates a system including a radar sensor and a computing device according to various examples.

### DETAILED DESCRIPTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), a tensor processing unit (TPU), integrated circuits such as application-specific integrated circuits or field-programmable gate array (FPGA) circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of processing radar data using an ML model are disclosed. Various use cases and application scenarios can be benefit from the disclosed techniques. For instance, an ML model may be used for solving a classification task or a regression task. For instance, an ML model may be used for providing gesture class estimations, people counting estimations, vital sign monitoring, to give just a few examples. Further examples include tracking objects moving through a scene and human-presence detection. Yet further examples include locating objects of a certain type in the scene. For instance, humans may be located in a scene. Specifically, techniques are disclosed that enable cross-domain applicability of one and the same ML model. One and the same ML model can be used without architectural adaptations across multiple use cases and applications. It may suffice to execute a initial training based on training samples of some initial domains. Then, no or little fine-tuning may be required to adapt the pre-trained ML model to the particular use case and application.

The techniques disclosed herein can be flexibly combined with different types of radar measurements. For instance, a short-range radar measurement could be implemented. Here, radar chirps can be used to measure a position of one or more objects in a scene having extents of tens of centimeters or meters. According to the various examples disclosed herein, a millimeter-wave radar sensor may be used to perform the radar measurement; the radar sensor operates as a frequency-modulated continuous-wave radar that includes a millimeter-wave radar sensor circuit, one or more transmitters, and one or more receivers. A millimeter-wave radar sensor may transmit and receive signals in the 20 GHz to 122 GHz range. Alternatively, frequencies outside of this range, such as frequencies between 1 GHz and 20 GHz, or frequencies between 122 GHz and 300 GHz, may also be used. As a general rule, a radar sensor can transmit a plurality of radar pulses, such as chirps, towards a scene. This refers to a pulsed operation. In some embodiments the chirps are linear chirps, i.e., the instantaneous frequency of the chirps varies linearly with time. A Doppler frequency shift can be used to determine the velocity of the object. An FMCW radar measurement may be employed. An FMCW radar measurement employs continuous transmission of frequency-modulated signals. In this technique, the radar sensor emits a continuous wave whose frequency varies over time in a controlled manner. This modulation allows for determination of the distance and velocity of objects within the scene. The transmitted signal typically follows a repeating pattern known as a chirp, where the frequency increases or decreases linearly with time. Each chirp is transmitted during a short duration referred to as fast time, which enables high-resolution range measurements based on the time delay of the reflected signals. A time-equidistant sequence of such chirps across all antenna channels constitutes a radar frame. The slow time dimension of a radar frame refers to the longer observation period defined by the sequence of chirps. This radar frame provides spatial and temporal information about the scene, captured through one or more antenna channels, which are individual transmit-receive pairs in the radar system. Generally, multiple radar frames are sequentially obtained, thereby observing the scene at multiple points in time. For example, a typical frame rate may be in the range of 1 kHz to 0.1 kHz.

The techniques disclosed herein may be combined with ultra-wideband (UWB) radar measurements. Pulsed radar measurements may be employed. UWB radar measurements may employ short-duration pulses across a broad spectrum to achieve high-resolution imaging and precise location tracking. The use of UWB radar measurements in combination with the disclosed techniques may provide enhanced accuracy in detecting objects, people, or gestures due to its ability to penetrate certain materials and operate effectively in cluttered environments. The wide bandwidth of UWB signals allows for fine spatial resolution, making it particularly suitable for applications such as people counting, tracking movable objects, or vital sign monitoring. Typical pulse durations for UWB radar measurements are in the range of 1 ns to 10 ns. Frequency bandwidths, accordingly, range from, e.g., 3 to 30 GHz.

Radar frames which are acquired using a radar measurement can structured similar for FMCW and UWB radar measurements. Both FMCW as well as UWB radar measurements process digitized "echo" signals (samples) that can be organized into 2-D or 3-D arrays, i.e., including samples along fast time, slow time, channel/antenna (radar frames). Thus, the frame structure of the radar frames is similar for FMCW and UWB radar measurements. The disclosed techniques and ML models can be used to process, both, FMCW and UWB, radar frames. In further detail, in FMCW radar systems, fast time corresponds to range samples. Within each chirp, the radar continuously sweeps its transmit frequency, such as an up-chirp from *f*0 to f1, while the receiver records a stream of ADC (Analog-to-Digital Converter) samples. These samples can be mapped to range after performing frequency or time analysis. Slow time, on the other hand, refers to the pulse or chirp index, as the radar transmits multiple chirps in sequence. This slow-time dimension is often used for Doppler processing or other temporal analyses, such as moving-target indication. If multiple receive antennas or MIMO (Multiple-Input Multiple-Output) channels are present, each channel captures its own fast-time and slow-time matrix. Thus, a radar frame can be viewed as a 3D data cube with dimensions of range samples × chirps × antenna channels. In FMCW radars, the "fast time" is sometimes referred to as the "range dimension," while "slow time" corresponds to the number of chirps, which is utilized for velocity or Doppler estimation. In contrast, UWB radar systems transmit short, broadband pulses rather than continuous frequency sweeps. Fast time in this context refers to range samples captured within each pulse repetition period. The radar samples the return echo over a relatively short time window, with each sample directly corresponding to a delay from the transmitted pulse, effectively representing an approximate range bin. Slow time, in UWB systems, corresponds to the pulse repetition index, as these impulses are typically repeated at a high pulse repetition frequency (PRF). Each pulse is indexed in time, similar to chirp counts in FMCW radar, enabling scene changes to be tracked, averages to be performed, or Doppler information to be extracted if the PRF and signal processing approach permit. As with FMCW radars, multiple UWB channels or antennas each capture their own stream of data per pulse. While both measurement principles allow for organizing data into a "fast-time vs. slow-time vs. channel" matrix, the interpretation of the fast-time axis differs. Nonetheless, techniques are disclosed that enable application of the same ML models to both domains, i.e., FMCW and UWB radar measurements.

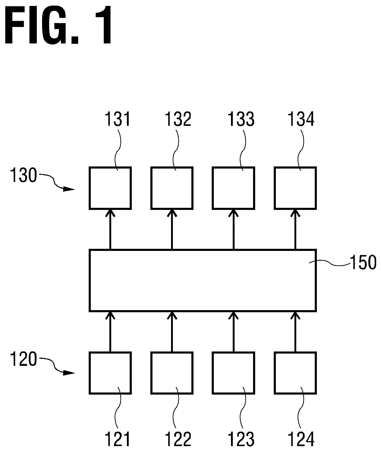

According to examples, such sequence of radar frames is used to obtain a respective sequence of radar datasets which sequence is then processed in an ML model. For example, each radar dataset may resolve radar reflections of the one or more objects along one or more of the following dimensions: range, Doppler, azimuthal angle, elevation angle, channel, and/or time. For instance, each radar data set may be a range-Doppler image (RDI). An example scenario is illustrated in FIG. 1.

In FIG. 1, a sequence 120 of radar datasets 121-124 is processed in an ML model 150. The output is a sequence 130 of predictions 131-134 for at least one of one or more objects included in a scene that is depicted by each of the radar data sets 121-124.

The ML model 150 may include multiple sub-models. At least one of these sub-models - e.g., a NN - is machine-learned during training. The ML model 150 may also include one or more sub-models that are parametrized using non-machine learning techniques.

As a general rule, various options are available for the implementation of the radar datasets 121-124 of the sequence 120. For example, each radar dataset 121-124 may resolve radar reflections of the one or more objects along one or more of the following dimensions: range, Doppler, azimuthal angle, elevation angle, channel, and/or time. For instance, each radar data set may be a RDI. Each radar dataset 121-124 of the sequence 120 may include a multidimensional array of complex values. A radar dataset resolving radar reflections along a dimension means that the radar dataset includes amplitude and/or phase values for multiple positions along an axis associated with that dimension, e.g., for multiple range positions or for multiple Doppler shifts, etc.

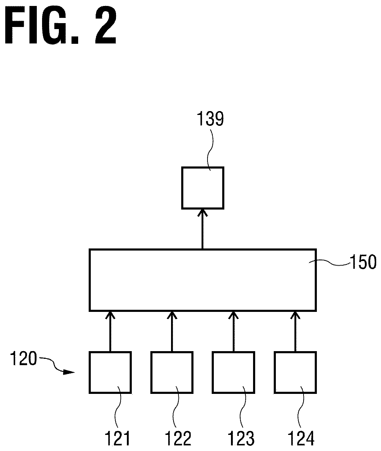

Illustrated in FIG. 1 is a scenario in which the sequence 130 of predictions 131-134 is provided , each radar dataset 121-124 having a corresponding prediction 131-134. Such configuration of the ML model 150 is sometimes referred to as sequence-to-sequence configuration. In another scenario, as illustrated in FIG. 2, the ML model 150 provides a single prediction 139 for multiple radar data sets 121-124 (sequence-to-one prediction).

In the various examples disclosed, it is possible to employ an architecture using a sequence-to-sequence configuration as illustrated in FIG. 1. It is also possible to employ a sequence-to-one configuration as illustrated in FIG. 2. Also, intermediate configurations are possible.

While FIG. 1 and FIG. 2 illustrate a sequence 120 including for radar datasets 121-124, as a general rule, more or fewer radar data sets may be processed in the ML model 150. For instance, a typical count of radar datasets concurrently processed in the ML model 150 may be in a range between 100 and 10000 radar datasets.

The predictions 131-134 or 139 output by the ML model 150 may correspond to a gesture presence detection or a gesture classification. The predictions 131-134, 139 may correspond to a presence detection (i.e., presence yes/no), object tracking (e.g., positional coordinates of an object), or vital sign classification.

According to various examples, real-time or near real-time predictions are provided by the ML model 150. The ML model 150 may be configured to provide a prediction - such as one of the predictions 131-134 shown in FIG. 1 or the prediction 139 shown in FIG. 2 - with a processing latency that is short when compared to the observation duration of the radar datasets 121-124 that are processed to obtain the respective prediction. In other words, with reference to the scenario of FIG. 2, the sequence 120 of radar datasets 121-124 defines a particular observation duration - e.g. 100 milliseconds to a second or more - and the time required by the ML model 150 to process the radar datasets 121-124 to provide the prediction 139 may be of the same order of magnitude as the observation duration, e.g. less than 20 milliseconds or less than 10 milliseconds. The particular processing time required to process one or more radar datasets and provide a corresponding prediction depends on the architecture of the ML model 150, as well as the hardware on which the ML model 150 is inferred. The real-time processing capability can be defined with respect to certain standard processing hardware available in edge deployment scenarios, i.e. handheld or mobile consumer-grade devices that can be deployed locally at the side of the radar sensor.

Various examples support the transferability of the ML model 150 across various domains. I.e., various examples allow to apply the ML model 150 in combination with various radar sensors and/or radar sensor deployments.

Such improved transferability of the ML model across domains is achieved through (i) a particular architecture of the ML model 150; and/or (ii) a particular training strategy of training the ML model 150; and/or (iii) a particular pre-processing strategy of pre-processing the radar datasets and/or the underlying radar frames.

First, re (i), the architecture of the ML model 150 is discussed. According to various examples of the disclosure, a foundational ML model is employed that is capable of processing radar datasets across multiple domains. For instance, one and the same foundational ML model may be used to process a first sequence of radar datasets acquired using a first radar sensor of a first type as well as may be used to process a second sequence of radar datasets acquired using a second radar sensor of a second type. Different radar sensor types may be different with respect to one or more parameter is such a sampling rate, number of antennas, frame rate, starting frequency, and frequency, samples per chirp, number of chirps, chirps repetition time, frame type, single input multi-output (SIMO) versus multi-input multi-output (MIMO) mode, highpass carrier frequency, low-pass carrier frequency, a transmitter antenna gain and/or receiver antenna gain, I / IQ mixer to generate an intermediate frequency signal, to give just a few examples. Above, a scenario has been explained in which the domain of the radar datasets depends on the particular type of radar sensor. The domain may be alternatively or additionally influenced by a deployment scenario of the radar sensor, e.g., its distance or orientation relative to a scene, a type of background in the scene, etc. In any case, by using such a foundational ML model that is capable of processing sequences of radar datasets originating from radar sensors of different types, the need to redesign and/or retrain the ML model for new radar sensor types or new deployment scenarios may be significantly reduced. Further, the accuracy in providing the prediction may be increased at the same amount of training data when applying the ML model in different domains. Various techniques disclosed herein are based on the finding that a particular ML model having such capability of being applied across multiple domains is a transformer NN, specifically a transformer encoder. Such transformer encoder includes one or more attention layers. Specifically, a sequence of input data is processed in the transformer and a sequence of contextualized embeddings is output. In the disclosed examples, a sequence of radar datasets is embedded into a sequence of embeddings. These embeddings are compact numerical representations of the radar datasets defined in a machine-learned latent space. The machine-learned latent space refers to an abstract representation of data that is automatically discovered by a machine learning model during its training process. In the context of processing radar datasets, such as those described in various examples, this latent space represents a compressed and meaningful encoding of the input data. Specifically, when a transformer encoder with one or more attention layers processes a sequence of embeddings derived from a sequence of radar datasets, it generates contextualized embeddings that reside within this machine-learned latent space. These contextualized embeddings not only capture essential features and relationships within the radar data, such as spatial information (e.g., range, azimuthal angle, and elevation angle), temporal dynamics (e.g., Doppler), and other domain-specific patterns. Since they are contextualized, they also capture dependencies and cross-frame features. I.e., they depend on relationships amongst multiple radar frames and radar datasets. For instance, certain features may be associated with a relationship between a radar dataset at a beginning of a respective sequence and another radar dataset in the middle of a respective sequence. Such features may not be visible when processing each frame in isolation; however, such features may be captured by the attention-mechanism that creates the contextualized embeddings.

The latent space is "machine-learned" in the sense that its structure and dimensions are not explicitly defined by human engineers but are instead automatically learned from the training data through optimization of the model's parameters.

The transformer encoder includes one or more attention layers. An attention layer enables the transformer encoder to focus on specific parts of the sequence of embeddings determined based on the sequence of radar datasets. The attention layer allows the model to dynamically allocate its "attention" to areas of the data that are most relevant for the task at hand, thereby improving the efficiency and accuracy of information extraction. The attention mechanism can capture relationships across multiple embeddings. The attention mechanism can make comparisons across embeddings. The attention layer achieves this by computing attention scores that represent the relative importance of different elements in the sequence of input data. The one or more attention layers may be implemented as self-attention layers or multi-headed self-attention layer. A self-attention layer is a specific type of attention mechanism where the transformer attends to various positions within the sequence of input data. This enables the transformer encoder to capture long-range dependencies and relationships between different input data along the sequence without relying on fixed-length windows or hierarchical structures like convolutional layers. The self-attention layer calculates representations by comparing each element in the input against all other elements using query, key, and value vectors derived from the input data. A multi-headed self-attention layer extends the self-attention concept by employing multiple attention mechanisms operating in parallel; different heads may focus on different relationships / contextualized features. The outputs from these independent "heads" are then concatenated (and optionally weighted relative to each other) and linearly transformed to produce the final output. Multi-headed self-attention allows the model to capture diverse types of relationships within the sequence of input data, as different attention heads may specialize in different aspects or patterns in the input sequence. This flexibility can enhance the ability of the transformer to process complex radar data effectively across multiple domains. Such attention mechanism, generally, facilitates applying the ML model including the transformer across multiple radar domains. It supports its ability to generalize across multiple domains, e.g., multiple different radar sensors. Thereby, the amount of additional training required to finetune the ML model when transferring it to a new domain is reduced. For instance, the amount of domain-specific radar datasets required in a finetuning training to enable the ML model to accurately process radar datasets from that new domain may be less than 10% as if compared to conventional ML model architectures including convolutional layers.

Various techniques are based on the finding that different domains are, in particular, characterized by different context features, i.e., features visible based on the comparison across embeddings associated with different radar datasets of a sequence. The self-attention mechanism can be trained in a domain-specific manner - e.g., through fine-tuning - to adapt to these different context features without needing to change the underlying architecture of the ML model, i.e., without needing to adapt hyperparameters of the ML model. For instance, the number of layers, the layer dimensions, or other hyperparameters of the ML model need not be adjusted when transferring the ML model from one domain to another domain. Instead, it may suffice to execute a fine-tuning training that enables the self-attention mechanism to learn the particular context features across the sequence of embeddings. The term "hyperparameters of ML model" may refer to parameters that are set before training the ML model. Hyperparameters are variables that govern the architecture of the model. These parameters are typically not learned during training but are instead specified by the practitioner based on experience, empirical validation, or computational constraints. In the context of the ML model disclosed herein, hyperparameters may also encompass aspects such as the number of attention layers, the dimensionality of embeddings, or the number of attention heads in a transformer-based architecture. Thus, finding the correct hyperparameter values is a tedious and error-prone process. By alleviating the need of managing the setting the hyperparameters of the ML model, faster and more robust domain-adaptation becomes possible. In the disclosed examples, the architecture of the ML model does not need to be fundamentally altered to adapt to different domains. Instead, adjustments to these hyperparameters, or fine-tuning of the model through additional training, may suffice to enable cross-domain applicability. This approach reduces the need for extensive retraining or architectural redesign when deploying the ML model in new operational environments or with different radar sensor configurations. The ability to maintain consistent hyperparameters across domains is a key advantage of the disclosed techniques. For example, the number of layers or attention heads may remain unchanged while only the weights of the model are updated during fine-tuning for a specific domain. This ensures that the ML model retains its generalization capabilities while still being able to adapt to domain-specific characteristics. Such flexibility is particularly valuable in scenarios where radar datasets originate from different sensor types, operational setups, or environmental conditions.

Second, re (ii), the training strategy is discussed. According to examples, the ML model 150 is trained in an unsupervised or self-supervised learning process. A reconstruction loss (function) can be used. The ML model is then - specifically for the purpose of training - complemented with a transformer decoder that aims at reconstructing the sequence of radar datasets. For instance, the transformer decoder can be used in conjunction with a transformer encoder as previously discussed. Such transformer decoder may include one or more attention layers, e.g., self-attention layers or multi-headed self-attention layers - as previously discussed for the transformer encoder. Thereby, the ML model learns to re-construct the sequence of input radar datasets. For this, no additional ground-truth labels are required. This reduces the effort to prepare training samples. Domain adaptation can be quickly achieved. The training may optionally be further enhanced by masking certain parts of the sequence of radar datasets. Here, parts of the sequence of radar datasets or other underlying data such as frames, antennas, range dimensions, or Doppler dimensions are masked, i.e., set to zero. Such masked reconstruction enables even higher accuracy and the ability to better generalize across multiple domains.

Third, re (iii), the pre-processing is discussed. Pre-processing is applied to the radar datasets and/or the underlying radar frames. The pre-processing enables adaptation across a wide range of sensory types and configurations, including variations in sensor bandwidth, sample rate, chirp frequency, number of chirps, frequency, number of frames, carrier frequency. The pre-processing may be employed using conventionally parametrized models, i.e., may not rely on machine learning. Thereby, such pre-processing model can be easily modified in a respective configuration phase to suit different sensor configurations or sensor types, e.g., depending on their performance specification. For instance, the pre-processing may be divided into three blocks such as sample harmonization, chirp harmonization, and time harmonization. Such blocks can then be interchanged and extended as needed, such as adding an angle harmonization block.

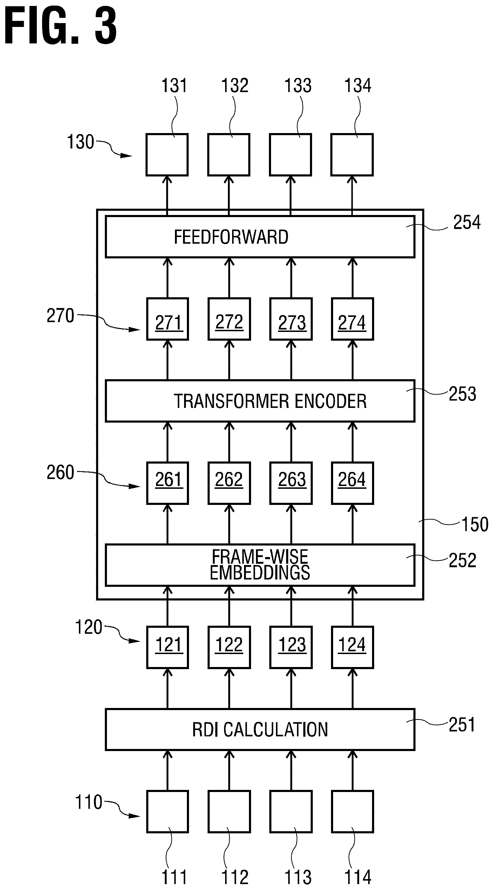

FIG. 3 is an illustration of an example implementation of the ML model 150 according to examples. In FIG. 3, a sequence 110 of radar frames 111-114 is obtained from a radar sensor. For each radar frame 111-114, a respective radar dataset, e.g., an RDI 121-124, is calculated in a respective RDI calculation module 251. Each radar frame 111-114 may be structured into fast-time dimension, slow-time dimension and one or more antenna channels. The data frame includes data samples over a certain sampling time for multiple radar pulses, specifically chirps. Slow time is incremented from chirp-to-chirp; fast time is incremented for subsequent samples. For instance, a 2-D Fast Fourier Transformation (FFT) of a data frame along fast-time and slow-time dimension yields an RDI 121-124. The RDIs 121-124 may be complex-valued.

Hereinafter, techniques are primarily explained for an example implementation of the radar datasets as RDIs; however, similar techniques may be applied to other forms of radar datasets, e.g., range-angle images or time spectrograms.

Next, the sequence 120 of RDIs 121-124 is input to the ML model 150. An module 252 determines, for each RDI 121-124 - i.e. per frame -, a respective embedding 261-264 in a machine-learned latent space. This embedding module 252 (which may be alternatively labeled frame-wise encoder module) may include one or more convolutional layers. By means of the embedding module 252, a sequence 260 of such embeddings 261-264 is obtained.

An embedding module, in the context of machine learning and radar data processing, may refer to a component or module that transforms input data into a compressed or latent representation, often referred to as an embedding. The embedding may have a lower dimensionality. In the disclosed examples, the embedding module 252 processes each RDI 121-124 to generate embeddings 261-264. These embeddings represent the radar data in a lower-dimensional space while preserving relevant features and patterns. The embedding module may employ various techniques such as CNNs or other architectures to extract meaningful information from the input RDIs. For instance, a convolutional embedding module may use one or more convolutional layers to process the spatial and temporal dimensions of the radar data, capturing local patterns and relationships within the RDI. An embedding, in this context, refers to a compact numerical representation of the radar data that encodes its essential characteristics. The embeddings 261-264 generated by the embedding module 252 capture both spatial and temporal information from the RDIs. Embeddings may also be designed to retain domain-invariant features, allowing the ML model to generalize across different radar sensor types or deployment scenarios. The embeddings are typically learned during the training process and may be fine-tuned to optimize performance for specific tasks such as gesture classification, object tracking, or presence detection.

Each embedding 261-264 may be associated with a respective positional encoding, indicative of the position of the respective embedding in the sequence of embeddings. These positional encodings may be learned during training. Since the sequential data is used, it is an option to enable feature recognition based on a positional order of the sequence. Without the positional encoding, the pre-trained NN 253 treats each sensor signal in the sequence as positionally independent from the other. Therefore, positional information is injected to retain the information regarding the order of elements in the sequence. For instance, a learnable positional encoding mechanism may be used where a learnable matrix with the same size as the input is added.

Then, the sequence 260 of embeddings 261-264 (along with their positional encoding) is processed in the pre-trained NN 253 (labeled "transformer encoder") including one or more attention layers, to thereby obtain a sequence 270 of contextualized embeddings 271-274. Each contextualized embedding depends on the context of the respective embedding 261-264 with respect to further embeddings 261-264 of the sequence 260.

A contextualized embedding generally refers to a refined or enhanced representation of data that incorporates contextual information derived from its position within a sequence or its relationships with other elements in the data. Thus, such contextualized embeddings are dependent on a relationships amongst the various embeddings processed further by the transformer encoder 253. In the context of the disclosed examples, the embeddings 261-264 generated by the embedding module 252 are processed further by a pre-trained NN 253, which may include one or more attention layers, to produce a sequence 270 of contextualized embeddings 271-274. These contextualized embeddings capture not only the local features of individual radar datasets but also the global context in which they appear within the sequence of RDIs.

This is achieved through mechanisms such as self-attention or multi-headed self-attention, which allow the pre-trained NN 253 to model relationships between different elements in the input sequence dynamically. The attention layers compute attention scores that reflect the relative importance of each embedding within the sequence, enabling the pre-trained NN 253 to focus on the most relevant aspects of the data for the task at hand. As a result, the contextualized embeddings 271-274 are richer and more informative than the initial embeddings 261-264, as they encode both local and global patterns in the radar datasets. This makes them particularly suitable for tasks that require understanding complex interactions or temporal dynamics within the scene, such as object tracking, gesture classification, or human-presence detection.

For a self-attention layer, each element of the input sequence is given three attributes: Value, Key, Query. An element wants to find specific values by matching its queries with the keys. The final value of query element is computed by averaging the accessed values. Then the final value is transformed to have a new representation for query element. Thus, self-attention is a sequence-to-sequence operation where the input sequence is transformed to an output sequence. Self-attention takes a weighted average over all input vectors. Each element of the input sequence of embeddings and their positional encodings is transformed with linear transformation a value, key and query vector respectively. To obtain this linear transformation, three learnable weight matrices are needed. These three matrices are usually known as K, Q and V, three learnable weight matrices that are applied to the same encoded input. The second step in the self-attention operation is to calculate a score by taking the dot product of every query vector and key vector in every permutation. The score determines how much focus to place on other parts of the sequence as we encode an element of the sequence at a certain position. The third step is to divide the scores and then normalize the results by passing them through a softmax operation. Softmax normalizes the scores by ensuring that the scores are positive and add up to 1. To filter out the irrelevant elements in a sequence when observing one element, we multiply each value vector by the softmax score. The fourth step is to sum up the weighted value vectors, which calculates the output of the self-attention layer at this position. A Multi-Head Attention Layer performs Self Attention several times in parallel; each time with a different set of values, keys and queries, this expands the model's ability to focus on different positions and gives the architecture different representation subspaces. If self-attention is executed Multi-Head Attention Layer: A Multi-Head Attention Layer performs Self Attention several times in parallel; each time with a different set of values, keys and queries, then the output would be in the dimension [N,timesteps, features] . In order to reduce the dimension back to [timesteps, feature_dimensions] a linear transformation is applied by a learnable weight matrix (Positional Feedforward with no activation function or general feed-forward).

Next, the sequence 270 of contextualized embeddings 271-274 is processed in a further NN, e.g., a feed-forward network 254, to obtain the sequence 130 of predictions 131-134. The feed-forward network 254 is configured to operate in a sequence-to-sequence configuration; as previously mentioned, the feed-forward network 254 may also operate in a sequence-to-one configuration (cf. FIG. 2). A feed-forward network refers to a type of NN where data flows only in one direction, from input layer through hidden layers to output layer, without any feedback loops or recurrence.

Various examples of the disclosure are based on the finding that the performance of the ML model 150 can be further increased by pre-processing the radar datasets or the radar frames based on which the radar datasets are calculated. This is discussed next.

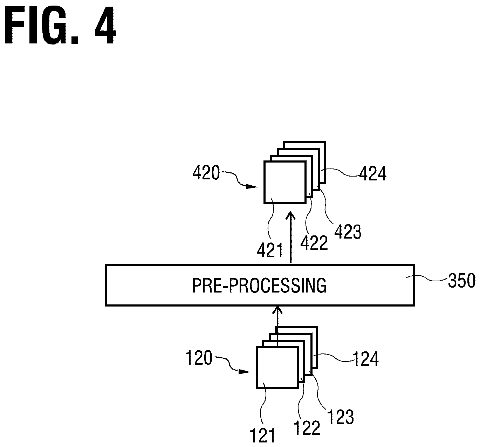

FIG. 4 schematically illustrates pre-processing, and a pre-processing module 350, each radar dataset 121-124 of the sequence 120. Pre-processing the radar datasets 121-124 in the pre-processing module 350 yields pre-processed radar datasets 421-424. Each pre-processed radar dataset 421-424 corresponds to a respective radar dataset 121-124.

Each radar dataset 121-124 may be pre-processed individually. Thus, when pre-processing the radar datasets 121-124, their sequence may not be considered.

Pre-processing the radar datasets 121-124 in the pre-processing module 350 enables to obtain the pre-processed radar datasets 421-424 that better mimic training radar datasets that have been used to train the ML model 150. Thus, a domain shift between inference and training can be mitigated.

The pre-processing module 350 supports transfer learning: only a relatively small amount of new training samples is required to reconfigure the ML model 150 towards a new domain, e.g., a new sensor and/or deployment configuration. For instance, this is helpful because certain countries/regulatory bodies have different requirements for the utilized radar bands. Thus, due to regulatory requirements it is typically required to adapt a trained NN across multiple domains. Conventional trained ML models do not generalize well across such multiple domains, e.g., if the wavelength - inversely proportional to the central carrier frequency - differs too much between the domains. According to the disclosed techniques, the ML model can be pre-trained using training samples in a certain domain or multiple domains. Then, only a small amount of training data is required to fine-tune the ML model to adapt to new, previously unseen domain; further, the pre-processing module 350 can be configured so that the radar dataset is input to the ML model - even when originating from the radar sensor deployed in a new domain - mimics the radar datasets required for a domain not represented in the training data.

For instance, the pre-processing module 350 may convert a resolution of each radar dataset 121-124 along one or more dimensions with a reference resolution: i.e., the pre-processed radar datasets 421-424 that have a resolution that equates or corresponds to the reference resolution. The reference resolution is associated with the training samples used during training of the ML model 150. For instance, the range resolution as well as the Doppler resolution may be converted to a reference range resolution and a reference Doppler resolution, respectively, for RDIs. The resolution generally refers to the increment size of the respective data structure in the respective domain. Resolution, in the context of radar data processing, refers to the degree of detail or granularity with which the radar measurements are represented along one or more dimensions. In the disclosed examples, resolution is particularly relevant when discussing RDIs, as it relates to the ability to distinguish between objects or features within the scene based on their spatial and velocity characteristics. For instance, range resolution indicates how well the radar can separate two objects that are close together in distance but distinct in position, while Doppler resolution refers to the ability to differentiate between objects moving at slightly different velocities. This process ensures that the pre-processed radar datasets 421-424 are consistent with the data on which the ML model was trained, thereby reducing any domain shift between the training and inference phases. The reference resolution may be defined by the range and Doppler resolutions of the training radar datasets, and the pre-processing module 350 may apply techniques such as interpolation or downsampling to achieve this conversion. By converting the resolution, the ML model can better generalize its performance across different radar sensors or deployment scenarios, improving accuracy and robustness in tasks like object tracking, gesture classification, or presence detection.

The pre-processing module 350 - alternatively or additionally to converting the resolution to a reference resolution - may convert a field of view of a least one dimension of each radar dataset with the reference field of view. The reference field of view may be associated with the training samples used during the training of the ML model 150.

Field of view, in the context of radar data processing, refers to the spatial extent or range over which the radar measurements are taken along one or more dimensions. For instance, a range field of view may define the minimum and maximum distances within which objects are detected, such as from 0 meters to 5 meters. Similarly, other dimensions like Doppler velocity or azimuthal angle may also have their respective fields of view. The field of view essentially defines the area or scope that the radar sensor is monitoring. For instance, the range field of view may be between 0 meters and 5 meters. The range field of view may then be cropped to, e.g., 0 meters to 2 meters, thereby better mimicking the training samples seen by the ML model 150 during the training.

Yet another example of a parameter that may be adjusted by the pre-processing module 350 - alternatively or additionally to the resolution and/or the field of view, as discussed above - is the signal amplitude dynamic range of each radar dataset. The pre-processing module 350 may convert the signal amplitude dynamic range of each radar dataset with a reference signal amplitude dynamic range of training samples used during the training of the ML model 150. The signal amplitude dynamic range may equate to the spectrum of values observed in the respective radar dataset, i.e., bounded by the minimum and maximum values.

Note that while above a scenario has been discussed in which the radar datasets 121-124 pre-processed in the pre-processing module 352 obtain the pre-processed radar datasets 421-424, alternatively or additionally pre-processing may also be applied to the raw radar data obtained from the radar sensor. For instance, each radar frame may be pre-processed. Similar pre-processing techniques as outlined above for the radar datasets may be equally applicable to pre-processing of radar frames. Specifically, certain pre-processing of a radar frame reflects in a respective change of the properties of the radar datasets. For example, to adjust the resolution or field of view of an RDI derived from a radar frame, several processing steps can be applied during pre-processing of radar frames: First, resolution adjustment: The resolution of an RDI is influenced by the number of samples collected along the fast-time and slow-time dimensions of a radar frame. For instance, downsampling the fast-time dimension may reduce the range resolution of the RDI, while upsampling it may increase the range resolution of the RDI. Similarly, adjusting the number of chirps or samples along the slow-time dimension can impact the Doppler resolution of the RDI. Second, field of view adjustment: The field of view of an RDI can be adjusted by cropping or truncating the radar frame data along one or more dimensions. For example, if the range field of view of the RDI is to be limited from 0 meters to 5 meters to a narrower range of 0 meters to 2 meters, the corresponding portion of the fast-time dimension in the radar frame may be selected and processed. Similarly, velocity or Doppler-based fields of view can be adjusted by selecting specific portions of the slow-time dimension. As will be appreciated from the above, each radar data frame may be processed by converting, e.g., the radar chirp bandwidth (and/or a number of radar chirps per radar frame, a chirp repetition rate, and inter-chirp time offset, and/or a number of samples per chirp). Such conversion may be implemented by interpolating or extrapolating respective samples of each radar frame to a respective reference radar chirps bandwidth (and/or to a respective reference number of radar chirps per radar frame, reference chirp repetition rate, reference inter-chirp time offset, or reference number of samples per chirp).

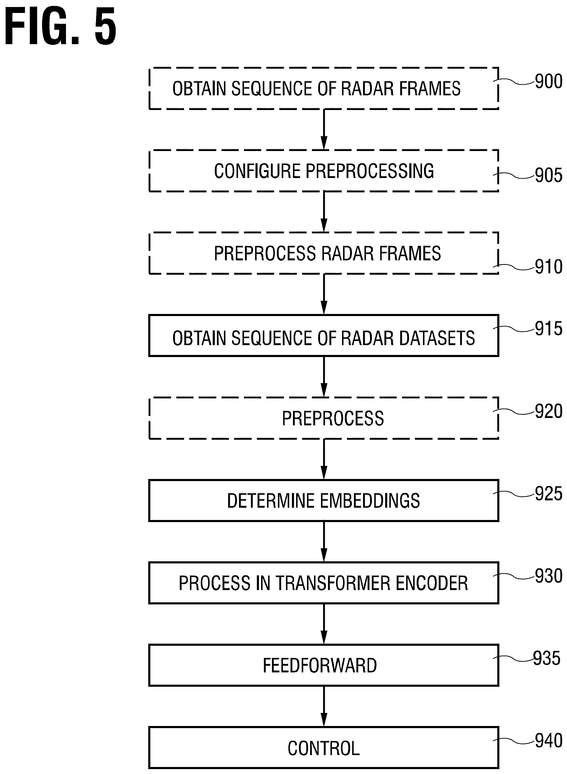

FIG. 5 is a flowchart of a method according to various examples. The method of FIG. 5 generally pertains to processing radar data obtained from a radar sensor in an ML model. The method of FIG. 5 may be executed by a processor, upon loading program code from a memory and upon executing the program code. Optional boxes are labeled with dashed lines in FIG. 5.

At box 900, a sequence of radar frames is obtained. Box 900 can include an analog-to-digital conversion. Box 900 can include readout of a radar sensor.

The sequence of radar frames may include a predefined number of radar frames. Alternatively, a stream of radar frames may be obtained. A stream of radar frames refers to a continuous sequence of radar frames captured over time from a radar sensor. This stream represents an ongoing flow of radar data that may be processed in real-time or near-real-time by the ML model 150. The radar frames within the stream are typically ordered chronologically and provide temporal information about the scene being monitored. In contrast to a predefined sequence of radar frames, which includes a fixed number of frames, a stream of radar frames is generally ongoing and may not have a predetermined length.

For instance, box 900 may include windowing of a stream of radar frames that is obtained at a fixed repetition rate from the radar sensor. Such windowing may be executed, e.g., in real time (online windowing). A sliding window may be used to obtain a predefined number of most up-to-date radar frames.

At box 905, a pre-processing module may be configured. As discussed above in connection with FIG. 4, a pre-processing module may operate based on radar datasets or may operate based on radar frames. First, considering a scenario in which the pre-processing module operates based on radar frames, i.e., radar frames are input to the pre-processing module to obtain pre-processed radar frames, the implementation of box 905 may include obtaining a sequence of radar frames that depict a scene including one or more objects. Then, one or more characteristics of each of the radar frames may be determined and the pre-processing module may be configured based on the one or more characteristics. For example, such characteristics may include a radar chirp bandwidth, a number of radar chirps per radar frame, a chirp repetition rate, and inter-chirp time offset, and/or a number of samples per chirp.

Such one or more characteristics of the radar frames may be determined based on investigation of the radar frames. In another implementation, such one or more characteristics of the radar frames may be determined based on performance specifications of the radar sensor.

These characteristics of the radar frames impact parameters of the RDI. For instance, the radar chirp bandwidth of the number of radar chirps affects the resolution along range dimension and Doppler dimension. More generally, wherein adjusting one or more parameter values of the radar frames, this impacts one or more parameters values of the radar datasets. Similarly, instead of configuring the pre-processing of radar frames, it is alternatively or additionally possible to configure pre-processing of radar datasets.

If pre-processing operates on radar frames, pre-processing may be executed at box 910. The pre-processing may be in accordance with the configuration of box 905. In some scenarios, pre-processing may be fixedly preconfigured in which case box 905 is optional.

At box 915 a sequence of radar datasets is obtained. For instance, box 910 may include converting the radar each radar frame to an associated radar dataset, e.g., by applying a 2-D FFT. For instance, RDIs may be obtained.

Note that in some scenarios, the radar datasets have been pre-determined, in which case box 900 is optional.

At box 920, the radar datasets are optionally pre-processed. Pre-processing may be in accordance with the configuration of box 905. If pre-processing is executed, it may also be fixedly pre-configured, which is why box 905 is optional.

Next, at box 925, for each - optionally pre-processed - radar dataset a respective embedding is determined. A pre-trained embedding module is used. Thereby, a sequence of embeddings is obtained. The embedding module has been previously discussed in connection with FIG. 3: embedding module 252.

Box 925 may also include associating each embedding with a respective positional encoding, indicative of the position of the respective embedding in the sequence of embeddings.

Then, at box 930, the sequence of embeddings - optionally along with positional encoding - is processed in a pre-trained NN that includes one or more attention layers, e.g., one or more self-attention layers or one or more multi-headed self-attention layers. A respective NN has been previously discussed in connection with FIG. 3: transformer encoder 253.

By processing the sequence of embeddings in the pre-trained NN at box 930, the NN including one or more attention layers, a sequence of contextualized embeddings is obtained. Each contextualized embedding depends on the respective embedding having the same sequence position along the sequence of embeddings as the contextualized embedding along the sequence of contextualized embeddings but further depends on at least one further embedding. Relationships amongst features present in individual embeddings can be captures in the contextualized embeddings. Masked attention can be employed to limit the attention to a certain neighborhood of each embedding. It is also possible that the attention captures all other embeddings along the sequence.

At box 935, the sequence of contextualized embeddings output from box 930 is processed in a respective NN to obtain a prediction of the property of relays one of the of at least one of the one or more objects of the scene. For instance, a sequence-to-sequence feed-forward network may provide a sequence of predictions, one prediction for each sequence position. Such a scenario was discussed above in connection with FIG. 1. In an alternative implementation, the feed-forward network may combine information from each contextualized embedding and provide a single prediction. Also, intermediate cases are possible.

The prediction varies from application scenario to application scenario. For instance, the prediction may be indicative of whether a certain gesture is executed in is observed in certain radar datasets. The prediction may be indicative of whether a human presence is detected in certain radar datasets, to give just some examples.

At box 940, a control signal is provided based on the at least one prediction. For example, the control signal may be provided to a human-machine interface that controls an automated system based on one or gesture inputs associated with the gesture presence or gesture classification and provided by a user. The control signal may be provided to a security apparatus that performs perimeter surveillance for a protected area; such a scenario may be applicable to human presence detection. The control signal may be provided to a lighting control unit, e.g., to switch on or switch off luminaires depending on whether human presence is detected. These are only some examples and various other examples are conceivable within the scope of the present disclosure.

A control signal generally refers to an output generated by a system in response to processed data, intended to influence or command another component, subsystem, or external device. In the context of the disclosed examples, the control signal is provided at box 940 based on one or more predictions made by the ML model 150. These predictions may relate to various application scenarios such as gesture classification, human presence detection, vital sign monitoring, or object tracking. For instance, if the ML model detects a specific hand gesture, it may generate a control signal to adjust settings in a human-machine interface, such as changing the volume of a device or selecting an option on a display. Similarly, if human presence is detected within a certain area, the control signal could be sent to a lighting system to turn on lights or to a security apparatus to trigger an alarm. The specific nature and use of the control signal depend on the particular application scenario and the system it interacts with. The control signal may take various forms, including digital commands, analog signals, or messages transmitted over a communication network. Its purpose is to translate the insights gained from processing radar data into actionable outputs that drive responses in external systems. By generating such control signals, the ML model enables integration with a wide range of applications, enhancing functionality and automation in fields like consumer electronics, security, healthcare, and smart infrastructure.

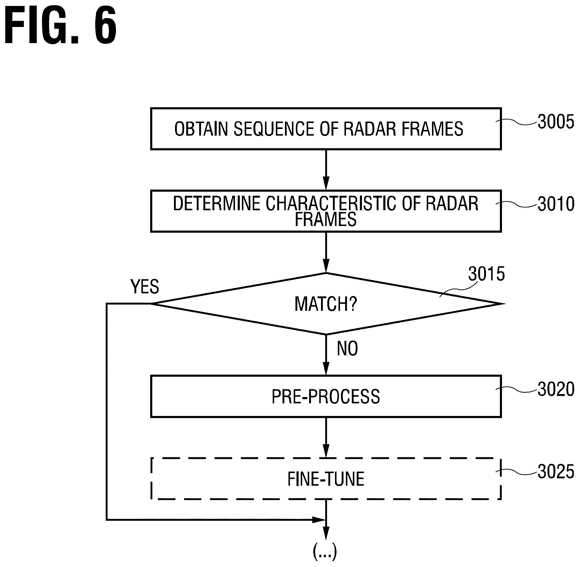

FIG. 6 is a flowchart of a method according to various examples. The method of FIG. 6 generally pertains to configuring a pre-processing of radar frames or radar datasets obtained from a radar sensor. The method of FIG. 6 may be executed by a processor, upon loading program code from a memory and upon executing the program code. Optional boxes are labeled with dashed lines in FIG. 6.

At box 3005, a sequence of radar frames is obtained. Box 3005 can correspond to box 900 of the method of FIG. 5.

At box 3010, one or more characteristics of the radar frames are determined. For instance, the radar frames can be inspected to determine the one or more characteristics. The characteristics may also be obtained from performance specifications of the radar sensor associated with the radar frames. Such characteristics may include one or more of a radar chirp bandwidth, a number of radar chirps per frame, a chirp repetition rate, and inter-chirp time offset, a chirp time, a frame time, and/or a number of samples per chirp. Respective aspects of determining one or more characteristics of the radar frames have been previously discussed in connection with box 905.

Next, at box 3015, it is judged whether a pre-trained ML model has been trained using a predefined number of training samples that each have one more reference characteristics that match the one or more characteristics as determined in box 3010. For instance, it may be determined whether a certain minimum amount of training samples have matching reference characteristics. This may include determining a distance between each of the one more characteristics of each of the radar frames and each of the one or more reference characteristics. This distance may then be compared against a predefined threshold; the respective characteristic may be converted to the respective reference characteristic if that distance is below the predefined threshold. By comparing the one more characteristics with the one or more reference characteristics seen during training of the ML model, it may be determined whether the ML model would be operating within or outside the scope of the training data.

If it is judged that the pre-trained ML model has not been trained using the predefined number of training samples each having the one or more reference characteristics that match the one more characteristics of each of the radar frames, then the method may commence at box 3020.

At box 3020, the sequence of radar frames or radar datasets obtained from the sequence of radar frames is pre-processed using a pre-processing module, e.g., the pre-processing module 350 as previously discussed in connection with FIG. 4. This pre-processing yields pre-processed radar frames having one or characteristics that match the one or more reference characteristics.

Optionally, at box 3025, fine-tuning of the ML model may be executed based on training data that have characteristics that match the characteristics of the radar frames of box 3005.

Then, the method can commence, e.g., with inferring the ML model based on the pre-processed radar frames or radar datasets obtained therefrom. For instance, this may correspond to executing box 925 and following boxes of the method of FIG. 5.

As will be appreciated, parts of FIG. 6 correspond to parts of FIG. 5. For instance, box 3010, box 3015, and box 3020 may be implemented as part of box 905, box 910, and/or box 920 of the method of FIG. 5.

In the method of FIG. 6, the pre-processing of the radar frames or radar datasets obtained from the radar frames at box 3020 may be conditionally executed. If it is judged, at box 3015, that the pre-trained model has been in fact trained using a predefined number of training samples each having the one or more reference characteristics, then the pre-processing at box 3020 may be bypassed ("yes"-branch of FIG. 6 exiting box 3015).

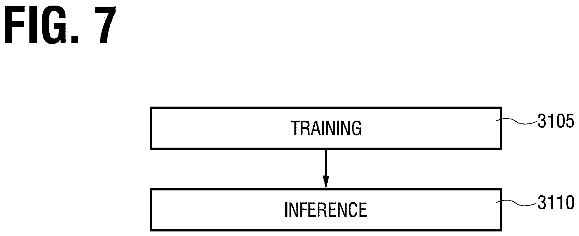

FIG. 7 is a flowchart of a method according to various examples. The method of FIG. 7 may be executed by a processor, upon loading program code from a memory and upon executing the program code.

At box 3105, an ML model is trained using training samples included in a training dataset. For instance, the ML model 150 as previously discussed in connection with FIG. 1, FIG. 2, and FIG. 3 may be trained.

For instance, such training samples may include input-output pairs of data, i.e., sequences of radar frames or radar data sets as inputs to the ML model 150 and one or more predictions as outputs of the ML model. The input-output pairs may be obtained based on manual annotation processes. Alternatively, or additionally, to acquire input-output pairs of data, additional sensor modalities may be used that are not available during inference at box 3110.

If the ML model 150 includes multiple submodules - e.g., as previously discussed in connection with FIG. 3 - end to end training can be employed. I.e., multiple submodules of the ML model 150 can be jointly trained, e.g., in a joint optimization that sets weights of each ML model 150.

Optimization refers to the process of adjusting parameters within a machine-learned (ML) model to improve its performance on a given task. In the context of training an ML model 150 using input-output pairs of data, optimization involves modifying the model's weights and biases to minimize a loss function that measures the difference between predicted outputs and actual outputs. A loss function is a mathematical construct used to quantify the error or discrepancy between the predictions made by an ML model and the actual target values. The choice of loss function depends on the specific application scenario and the type of prediction being made, such as regression or classification. For example, mean squared error is commonly used for regression tasks, while cross-entropy loss is often employed for classification problems. Gradient descent is an optimization algorithm that iteratively adjusts the parameters of an ML model to minimize a loss function. It works by computing the gradient of the loss with respect to each parameter and then updating those parameters in the direction of the negative gradient. This process is repeated until convergence or a stopping criterion is reached, resulting in optimized values for the model's parameters. Other optimization techniques are possible such as stochastic gradient descent and variations. Backpropagation is a technique used to compute gradients during the optimization process. It involves applying the chain rule of calculus to compute the derivatives of the loss function with respect to each parameter in the ML model. By recursively applying this rule, backpropagation efficiently computes the gradients needed for gradient descent and other optimization algorithms. In training an ML model 150 as described above, these concepts are used together to optimize the model's performance on a given task. For instance, during end-to-end training of multiple submodules within the ML model 150, joint optimization may involve computing the gradients of the loss function with respect to each submodule's parameters using backpropagation and then updating those parameters via gradient descent. This process is repeated iteratively until convergence or a stopping criterion is reached, resulting in optimized values for all parameters across the multiple submodules.

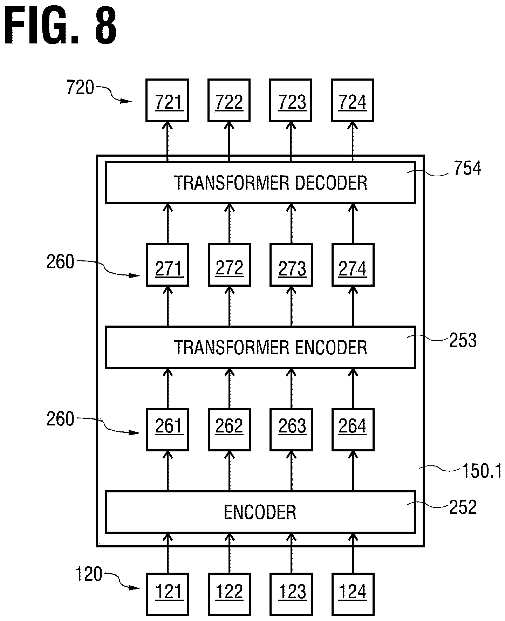

One particular loss that may be employed is a reconstruction loss. The training may employ un-supervised or self-supervised training employing such reconstruction loss. For this, the ML model may be modified if compared to the architecture of the ML model used during inference at box 3110. Instead of using a fully-connected NN that determines the use-case specific predictions 131-134 (cf. FIG. 3), a transformer decoder 753 may be used to determine a reconstructed sequence 720 of reconstructed radar datasets 721-724 (cf. FIG. 8). The various parts of the ML model 150 can be trained to minimize a difference between the reconstructed radar datasets 721-724 and the radar datasets 121-124. A pixel-wise difference may be considered for RDIs. End-to-end training can be employed for the various components of the ML model 150, e.g., the embedding module 252, the transformer encoder 253, the positional embeddings, etc.

Such reconstruction loss can also be combined with a masked training process. Here, some elements of the input sequence 120, e.g., some radar data sets 121-124, are masked. Then, the ML model learns to reconstruct such masked elements of the input sequence 120, further increasing the robustness and ability of the ML model to generalize. In other words, the proposed ML model 150 offers an additional functionality which is the ability to reconstruct missing radar images. This is achieved by intentionally masking certain parts of the input data, such as frames, antennas, range dimensions, or Doppler dimensions, before feeding it into the ML model 150. By adding a transformer decoder to the transformer encoder, the ML model 150 is trained to reconstruct the missing radar datasets. The advantage of this approach is that it does not require labeled radar datasets - at least for the domain-specific finetuning -, making it an un-supervised or self-supervised learning method. Once trained, this architecture can be used to predict missing or lost frames or even interpolate a higher radar frame rate. Furthermore, this technique enables the ML model 150 to learn radar-specific encodings which can be leveraged to improve the model's performance and reduce the amount of training samples required to achieve high accuracy.

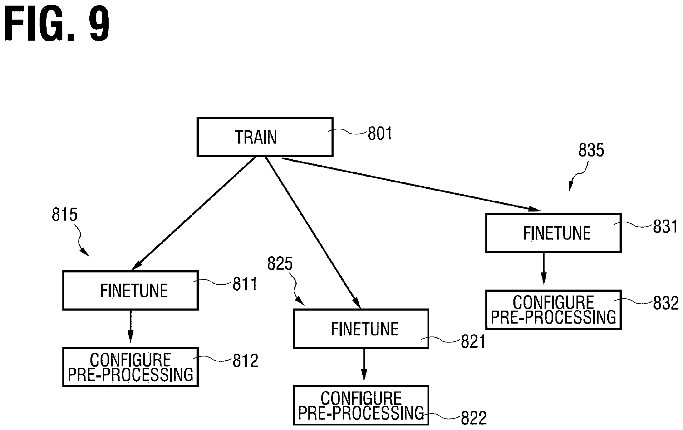

FIG. 9 is a flowchart of a method according to various examples. FIG. 9 specifically pertains to aspects of the training. For instance, the method of FIG. 9 may be a particular implementation of box 3105 of the method of FIG. 7.

At box 801, training is implemented for one or more domains captured in a training dataset. The training can be based on ground truth data for the respective predictions, e.g., the gesture class predictions, gesture activity predictions, human-presence predictions, location of objects, etc. Ground-truth data can be obtained from manual labeling by experts. A measurement campaign may be carried out to acquire the initial training samples included in the training dataset. The training data set may include training samples for multiple domains, e.g., defined by one or more respective radar sensors and one or more respective deployment scenarios of these one or more radar sensors.

Then, depending on the particular domain 815, 825, 835, different boxes 811, 812; 821, 822; 831, 832 are executed. These domains 815, 825, 835 may differ with respect to, e.g., the type of radar sensor employed and/or the deployment scenario of the radar sensor.

For instance, TAB. 1 illustrates properties of three different radar sensor types that may define the domains 815, 825, 835.

**TAB. 1: Three radar sensor types that may define different domains to which the ML model 150 may be adapted based on finetuning.**

| | Sensor 1 Domain 815 | Sensor 2 Domain 825 | Sensor 3 Domain 835 |
|---|---|---|---|
| Architecture | FIG. 10 (I demod) | FIG. 10 (I demod) | FIG. 11 (IQ demod) |
| Sampling Rate | 2 Mhz | 1.5 MHz | 4 MHz |
| Number of Antennas | 3 RX, 1 TX | 3 RX, 1TX | 4 RX, 2 TX |
| Frame Rate | 33 Hz | 33 Hz | 20 Hz |
| Starting Frequency | 58.5 Ghz | 61 Ghz | 77 Ghz |
| End Frequency | 62.5 GHz | 61.5 GHz | 80 GHz |
| Samples per Chirp | 64 | 32 | 128 |
| Number of Chirps | 32 | 64 | 64 |
| Chirp Repetition Time | 0.0003 s | 0.00023 | 0.00076 s |
| Frame time | 0.0093 s | 0.0299 | 0.04864 s |
| MODE | SIMO | SIMO | MIMO (TDM) |
| Highpass cutoff frequency | 80000 Hz | 40000 Hz | Unknown |
| Lowpass cutoff frequency | 500000 Hz | 600000 Hz | 600000 Hz |
| TX Antenna Gain | 31 dB | 31 dB | 31 dB |
| RX Antenna Gain | 30 dB | 40 dB | 40 dB |

Depending on the particular domain 815, 825, 835, a fine-tuning is executed at the respective box 811, 821, 831. The fine-tuning can be based on unsupervised or self-supervised training, e.g., using a reconstruction loss (cf. FIG. 8). Alternatively or additionally to the fine-tuning, at respective box 812, 822, 832, a pre-processing module (cf. FIG. 4: pre-processing module 350) may be configured. Respective techniques have been previously discussed in connection with box 905 in FIG. 5.

According to various disclosed examples, the fine-tuning at one of boxes 811, 821, 831 may rely solely on the reconstruction loss. This may be beneficial, because then ground-truth predictions may not be required for domain adaptation. Domain adaptation can thereby be implemented relatively fast and reliable. Such a technique may be, in particular, helpful if the fine-tuning ensures that a respective of the particular domain of the input radar data sets, the embedding module and transformer encoder project into the same machine-learned latent space, characterized by certain predefined features. Thereby, the feed-forward neural network can operate based on similar features across all domains.

Furthermore, while in the scenario FIG. 9 a scenario is illustrated where domain-specific fine-tuning of the ML model 150 is employed to adapt the ML model 150 to the respective domains 815, 825, 835 not seen during the training, due to the architecture of the ML model 150 including the transformer encoding including at least one attention layer the ML model 150 may be generally capable of reliably solving a certain task even when operating outside of the spectrum covered by the training dataset. Thus, in some scenarios, domain-adaptation may not require fine-tuning. It may suffice to configure the pre-processing module at one of boxes 812, 822, 823.

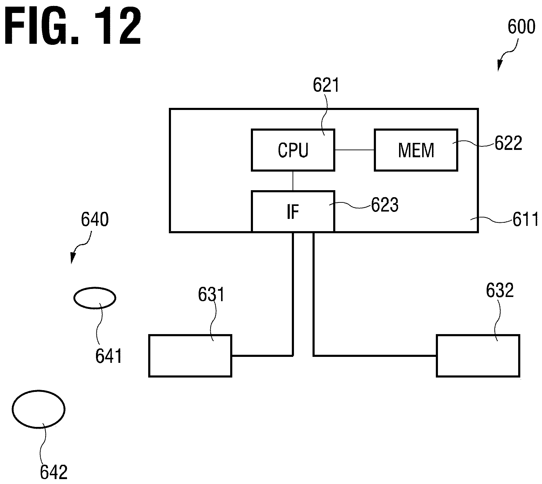

FIG. 12 schematically illustrates a system 600 including a radar sensor 631 that observes a scene 640 including multiple objects 641, 642. The radar sensor 631 is coupled to a processing device 611 via a communication interface 623 of the processing device 611. The processing device 611 also includes a processor unit 621 and a memory 622. The processor unit 621 may load program code from the memory 622 and execute that program code. The processor unit, upon executing the program code, may perform techniques as disclosed herein, e.g., edge-inference of an ML model such as the ML model 150, one or more of the boxes of the method of FIG. 5, etc.. The processor unit 621 may also communicate with one or more further technical devices 632 via the communication interface 623, e.g., to provide one or more control signals based on a result of such edge-inference of the ML model. Example of further technical devices 632 include a human-machine interface controlling an automated system.

Summarizing, techniques have been disclosed that generally relate to processing radar data in an ML model.

The techniques may include training an ML model using input-output pairs of data, where the inputs are sequences of radar frames or radar datasets and the outputs are predictions for certain use cases. The training may employ end-to-end training of multiple submodules within the ML model, joint optimization, and reconstruction loss. Alternatively, or in addition to supervised training methods, unsupervised or self-supervised training employing reconstruction loss may be used.

The techniques further include pre-processing radar frames or radar datasets obtained from a radar sensor by adjusting / converting one or more characteristics of the radar frames or radar datasets so that these match certain reference characteristics seen during training of the machine learning model. Such converting can ensure that the machine learning model is operating within the scope of its training data, thereby improving accuracy and robustness.

The pre-processing may be conditionally executed based on a comparison between the one or more characteristics of each radar frame or radar dataset and one or more reference characteristics. If the one or more characteristics match the one or more reference characteristics, the pre-processing may be bypassed.

In an example, the techniques include determining whether the ML model has been trained using training samples having certain reference characteristics that match certain characteristics of each radar frame obtained from a radar sensor. Based on this determination, it is decided whether to apply a pre-processing module to adjust one or more parameters of the radar frames so as to obtain pre-processed radar frames that have matching reference characteristics.

The techniques further include processing a sequence of embeddings in a pre-trained neural network that includes one or more attention layers to obtain contextualized embeddings.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, above, various scenarios have been disclosed in which the input to the ML model is formed by a sequence of radar data sets that depict a scene by means of a multi-dimensional representation of radar reflections at one or more objects of the scene. Similarly, the input to the ML model may be formed by a sequence of radar frames.

## Claims

1. A computer-implemented method, the method comprising:
- obtaining (900, 915) a sequence (120) of radar datasets (121, 122, 123, 124) depicting a scene (640) including one or more objects (641, 642), each radar dataset (121, 122, 123, 124) of the sequence (120) comprising a multi-dimensional representation of radar reflections at the one or more objects (641, 642),
- determining (925), for each radar dataset (121, 122, 123, 124) of the sequence (120), a respective embedding (261, 262, 263, 264) using a pre-trained embedding module (252), thereby obtaining a sequence (260) of embeddings (261, 262, 263, 264), each embedding being a numerical representation of the respective radar dataset in a machine-learned latent space,
- processing (930) the sequence (260) of embeddings (261, 262, 263, 264) in a pre-trained neural network (253) comprising one or more attention layers, to obtain a sequence (270) of contextualized embeddings (271, 272, 273, 274), each contextualized embedding (271, 272, 273, 274) depending on a relationship between the respective embedding (261, 262, 263, 264) and further embeddings (261, 262, 263, 264) of the sequence (260), and
- processing (935) the sequence of contextualized embeddings (271, 272, 273, 274) to obtain at least one prediction (131, 132, 133, 134, 139), and
- providing (940) a control signal based on the at least one prediction (131, 132, 133, 134, 139).

2. The computer-implemented method of claim 1, further comprising:
- converting (920) at least one of a range resolution, a Doppler resolution, an angular resolution, or a temporal resolution of each radar dataset to a respective reference resolution of training samples used during training of at least the pre-trained embedding module.

3. The computer-implemented method of claim 1 or 2, further comprising:
- converting (920) at least one of a range field of view, a Doppler field of view, an angular field of view, or a temporal field of view of each radar dataset to a respective reference field of view of training samples used during training of at least the pre-trained embedding module.

4. The computer-implemented method of any one of the preceding claims, further comprising:
- converting (920) a signal amplitude dynamic range of each radar dataset to a reference signal amplitude dynamic range of training samples used during training of at least the pre-trained embedding module.

5. The computer-implemented method of any one of the preceding claims, further comprising:
- obtaining, from a radar sensor (631), a sequence (110) of radar frames (111, 112, 113, 114) depicting the scene (640),
- for each radar frame, converting at least one of a radar chirp bandwidth, a number of radar chirps per radar frame, a chirp repetition rate, an inter-chirp time offset, or a number of samples per chirp, to thereby obtain a sequence of pre-processed radar frames, and
- determining the sequence of radar datasets based on the sequence of pre-processed radar frames.

6. The computer-implemented method of claim 5,
wherein the at least one of the radar chirp bandwidth, the number of radar chirps per radar frame, the chirp repetition rate, the inter-chirp time offset, or the number of samples per chirp is converted by interpolating or extrapolating respective samples of the each radar frame to at least one of a reference radar chirp bandwidth, a reference number of radar chirps per radar frame, a reference chirp repetition rate, a reference inter-chirp time offset, or a reference number of samples per chirp used during training of at least the pre-trained embedding module.

7. The computer-implemented method of any one of the preceding claims,
wherein the sequence of contextualized embeddings is processed to obtain a respective prediction for each radar dataset of the sequence of radar datasets.

8. The computer-implemented method of any one of the preceding claims,
wherein each radar dataset of the sequence of radar datasets comprises a multidimensional array of complex values.

9. The computer-implemented method of any one of claims 1 to 8,
wherein the at least one prediction comprises at least one of a gesture presence detection or a gesture classification.

10. The computer-implemented method of claim 9,
wherein the control signal is provided to a human-machine interface controlling an automated system based on one or more gesture inputs associated with the at least one of the gesture presence or the gesture classification.

11. The computer-implemented method of any one of claims 1 to 8,
wherein the at least one prediction comprises at least one of a presence detection, object tracking, or vital classification.

12. The computer-implemented method of any one of the preceding claims,
wherein each radar dataset (121, 122, 123, 124) resolves the radar reflections of the one or more objects along one or more of the following dimensions: range, Doppler, azimuthal angle, elevation angle, channel; and/or time.

13. The computer-implemented method of any one of the preceding claims,
wherein the sequence of radar datasets is obtained by windowing a stream of radar frames obtained at a fixed repetition rate from a radar sensor observing the scene.

14. A processing device (600) comprising a processor unit and a memory, the processor unit being configured to load program code from the memory and to execute the program code, the processor unit, upon executing the program code, being configured to:
- obtain (900, 915) a sequence (120) of radar datasets (121, 122, 123, 124) depicting a scene (640) including one or more objects (641, 642), each radar dataset (121, 122, 123, 124) of the sequence (120) comprising a multi-dimensional representation of radar reflections at the one or more objects (641, 642),
- determine (925), for each radar dataset (121, 122, 123, 124) of the sequence (120), a respective embedding (261, 262, 263, 264) using a pre-trained embedding module (252), thereby obtaining a sequence (260) of embeddings (261, 262, 263, 264), each embedding being a numerical representation of the respective radar dataset in a machine-learned latent space,
- process (930) the sequence (260) of embeddings (261, 262, 263, 264) in a pre-trained neural network (253) comprising one or more attention layers, to obtain a sequence (270) of contextualized embeddings (271, 272, 273, 274), each contextualized embedding (271, 272, 273, 274) depending on a relationship between the respective embedding (261, 262, 263, 264) and further embeddings (261, 262, 263, 264) of the sequence (260), and
- process (935) the sequence of contextualized embeddings (271, 272, 273, 274) to obtain at least one prediction (131, 132, 133, 134, 139), and
- provide (940) a control signal based on the at least one prediction (131, 132, 133, 134, 139).

15. The processing device (600) of claim 14, wherein the processor unit, upon executing the program code, is further configured to perform the method of any one of claims 1 to 13.
